# EUROPÄISCHE PATENTSCHRIFT

(11) **EP 0 717 285 B1**
(45) Veröffentlichungstag und Bekanntmachung des Hinweises auf die Patenterteilung: **26.03.2003**
(21) Anmeldenummer: 95203347.0
(22) Anmeldetag: 05.12.1995
(51) Int. Cl.: G01P 13/00

(54) **Anordnung zur Überwachung der Drehzahl eines Drehanodenantriebsmotors von Röntgenröhren**
Rotation monitoring system for a rotary-anode drive motor in X-ray tubes
Système de surveillance de la rotation d'un moteur d'entraînement d'une anode tournante dans un tube à rayons X

(30) Priorität: 14.12.1994 DE 4444361
(43) Veröffentlichungstag der Anmeldung: 19.06.1996
(73) Patentinhaber: Philips Corporate Intellectual Property GmbH, 20099 Hamburg (DE); Koninklijke Philips Electronics N.V., 5621 BA Eindhoven (NL)
(72) Erfinder: Vogler, Gerd, c/o Philips Patentverwaltung GmbH, D-22335 Hamburg (DE)
(74) Vertreter: Volmer, Georg, Dipl.-Ing.

(56) Entgegenhaltungen:
- DE-A- 3 123 407
- DE-U- 9 006 860
- US-A- 4 225 787

## Beschreibung

Die Erfindung bezieht sich auf ein Röntgengerät mit einer Drehanodenröntgenröhre, mit einer Einrichtung zur Überwachung der Drehzahl eines Drehanodenantriebsmotors der Röntgenröhre, mit einer Sensorschaltung zur Ermittlung eines vom Phasenwinkel zwischen einer Bezugsspannung und einem dem Motor zugeordneten Strom abhängigen Winkelsignals, mit einer Vergleichsschaltung zum Detektieren der Änderung des Winkelsignals, welches als Kriterium für die Motordrehzahl dient, sowie mit einem Frequenzumrichter.

Bei einer in der DE-U-90 06 860 beschriebenen derartigen Anordnung wird ein drehzahlabhängiges Signal durch Vergleich eines vom Phasenwinkel eines Motorstroms abhängigen Signals mit einem festen Referenzwert gewonnen.

Bei Induktionsmotoren mit geringer Ankerrückwirkung (beispielsweise bei großem Luftspalt oder bei kleiner Leistung) ändert sich der Phasenwinkel eines Motorstroms vom Stillstand bis zur Betriebsdrehzahl nur geringfügig. Da auch Toleranzschwankungen der Motordaten und der Überwachungsschaltung berücksichtigt werden müssen, ist als Kriterium für die Feststellung, ob sich ein Motor dreht oder nicht, nur eine sehr kleine Winkeldifferenz nutzbar.

Dann müssen die Schaltungselemente einer Überwachungsschaltung eine hohe Genauigkeit aufweisen und/oder für einen jeweiligen Induktionsmotor justiert werden. Dadurch entstehen hohe Kosten. Für Motoren mit besonders niedriger Ankerrückwirkung ist die bekannte Schaltung wegen zu geringer Phasenwinkeländerung unbrauchbar, wie z.B. bei Drehanodenantriebsmotoren von Röntgenröhren, bei denen zwischen Stator und Rotor ein großer Isolierspalt zur Isolation der zwischen diesen Motorkomponenten liegenden Hochspannung erforderlich ist.

Der Erfindung liegt die Aufgabe zugrunde, eine Anordnung der eingangs genannten Art derart zu gestalten, daß sie auch für solche Induktionsmotoren geeignet ist, bei welchen zwischen Stillstand und Betriebsdrehzahl nur eine geringe Phasenwinkeländerung gemessen wird. Mit gleichen Überwachungseinrichtungen sollen ohne wesentliche Anpassungsmaßnahmen selbst verschiedenartige Motoren zuverlässig überwacht werden können, auch dann noch, wenn einer der Motoren über einen Isoliertrafo versorgt wird.

Die Lösung gelingt bei einer Anordnung der eingangs genannten Art dadurch, daß eine Einrichtung zur Bildung eines kurzzeitigen Tastsignals für die Veranlassung einer Erniedrigung der Frequenz des Drehanodenantriebsmotors vorgesehen ist.

Bei der Frequenzerniedrigung auf die Tastfrequenz dreht sich der Drehanodenantriebsmotor, sofern er ordnungsgemäß angelaufen war, mit - bezogen auf die Tastfrequenz - übersynchroner Drehzahl im generatorischen Bereich. Dann ergibt sich zwischen Stillstand und generatorischer Drehzahl eine erheblich größere Änderung des Stromphasenwinkels.

Bei einer bevorzugten Ausgestaltung ist vorgesehen, daß Mittel zum Speichern des vor Beginn des Tastsignals bei Betriebsfrequenz ermittelten Winkelsignals sowie Mittel zum Vergleichen dieses Winkelsignals mit einem während der Tastzeit bei Tastfrequenz ermittelten Winkelsignal vorgesehen sind. Dann kann eine bestimmte Überwachungseinrichtung ohne wesentliche Anpassungsmaßnahmen für Motoren unterschiedlicher Bauart und Leistung, selbst bei erheblich abweichenden Betriebsfrequenzen verwendet werden. Dieser Vorteil wird im Vergleich zum bekannten Verfahren dadurch ermöglicht, daß die Referenzspannung nicht mehr ein Festwert, sondern ein vom jeweiligen Motor bestimmter variabler Wert ist.

Genügend große Änderungen des Phasenwinkels ergeben sich, wenn die Tastfrequenz zwischen 25% und 75% der Betriebsfrequenz beträgt. Bevorzugt werden Werte von 40% bis 60%.

Gemäß einer weiteren Ausgestaltung ist vorgesehen, daß die Phasenlage der Bezugsspannung derart gewählt ist, daß das bei Betriebsfrequenz und Betriebsdrehzahl meßbare Winkelsignal einem Winkel von 25° bis 80°, insbesondere 40° bis 60° entspricht. Dann können auch große Änderungen des Phasenwinkels erfaßt werden, ohne daß sich das Vorzeichen des zu erfassenden Winkels ändert. Besonders große Phasenwinkeländerungen von mehr als ±30° können sich bei Unterbrechung von zum Motor führenden Leitungen ergeben.

Mit der erfindungsgemäßen Anordnung kann mit einem einmaligen Meßvorgang, welcher im allgemeinen nur 0,1 bis 0,2 sec beansprucht, überprüft werden, ob der Motor angelaufen ist.

Da die Tastzeiten sehr gering sind, ist es aber auch möglich, daß in regelmäßigen Zeitabständen Meßvorgänge durchgeführt werden. Damit kann eine kontinuierliche Überwachung durchgeführt werden, ohne daß die Drehzahl des Motors durch die sehr kurzen Meßvorgänge merkbar erniedrigt wird.

Bevorzugt sind Mittel zum Sperren der Einschaltung der Röntgenröhre bei Detektion einer zu niedrigen Motordrehzahl vorgesehen.

Die Lösung der Aufgabe gelingt auch durch einen Röntgengenerator mit einer Einrichtung zur Überwachung der Drehzahl eines Drehanodenantriebsmotors, mit einer Sensorschaltung zur Ermittlung eines vom Phasenwinkel zwischen einer Bezugsspannung und einem dem Motor zugeordneten Strom abhängigen Winkelsignals, mit einer Vergleichsschaltung zum Detektieren der Änderung des Winkelsignals, welches als Kriterium für die Motordrehzahl dient, sowie mit einem Frequenzumrichter, der dadurch gekennzeichnet ist, daß eine Einrichtung zur Bildung eines kurzzeitigen Tastsignals für die Veranlassung einer Erniedrigung der Frequenz des Drehanodenantriebsmotors vorgesehen ist.

Ein bevorzugtes Ausführungsbeispiel der Erfindung wird anhand der Zeichnung erläutert.
- Fig. 1: zeigt anhand eines Übersichtschaltbildes das Prinzip einer bevorzugten erfindungsgemäßen Einrichtung zur Überwachung der Betriebsdrehzahl eines Drehanodenantriebsmotors einer Röntgenröhre.
- Fig. 2-4: zeigen Schaltungseinzelheiten der Überwachungsschaltung nach Fig. 1 und zugehörige Signalverläufe.

Eine Drehanode 1 einer Röntgenröhre 2 ist durch einen dreiphasigen Induktionsmotor 3 angetrieben, dessen in Dreieck geschalteten Wicklungen 4 über einen Isoliertransformator 5 an die Anschlüsse U,V,W eines Frequenzumrichters 6 angeschlossen sind. Mittels einer Steuereinrichtung 7 ist die Ausgangsfrequenz des Frequenzumrichters 6 einstellbar. Die Hochspannungsquellen 8 und 9 werden zur Erzeugung der Röntgenstrahlung 10 nach dem Hochlauf des Induktionsmotors bei Betriebsdrehzahl eingeschaltet. Eine Leitung von der Hochspannungsquelle 8 ist innerhalb des Isoliertransformators 5 mit einer auch zur Anode 1 führenden Motorzuleitung verbunden.

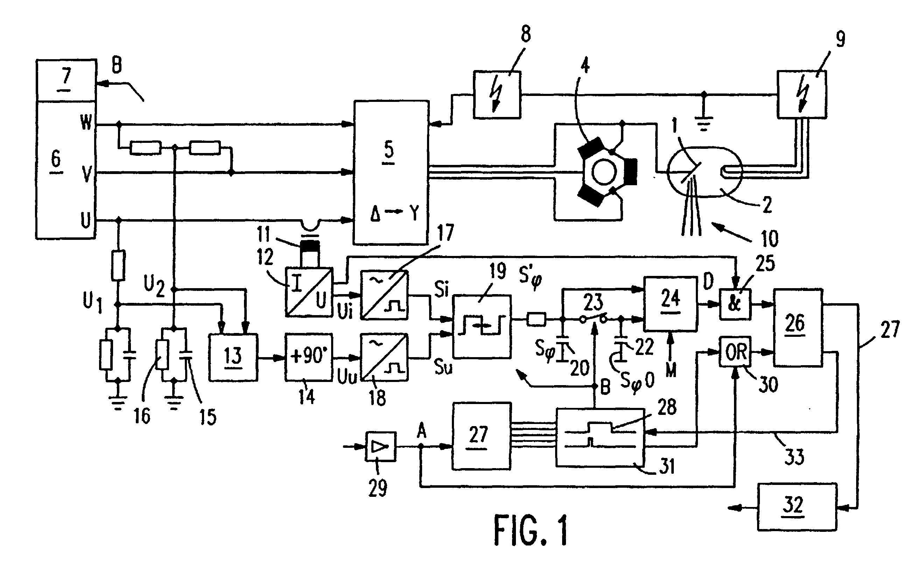

Im unteren Bereich der Fig. 1 ist eine Einrichtung zur Überwachung der Drehzahl des Motors 3 als Übersichtsschaltbild dargestellt. Eine dem Strom I in der von U kommenden Leitung proportionale Spannung Ui wird über den Stromwandler 11 und den Verstärker 12 abgeleitet. Eine geeignete Bezugsspannung Uu konstanter Phasenlage wird über Widerstandskombinationen mittels eines Differenzverstärkers 13 und eines eine 90°-Phasendrehung bewirkenden Integrators 14 gebildet.

Die Widerstandskombinationen und die gewählten Abzweigungen von den Klemmen U,V und W bewirken in Verbindung mit dem Integrator 14, daß die Phasenwinkeldifferenz zwischen Ui und Uu genügend groß ist, so daß auch hohe positive und negative Phasenwinkeländerungen nicht zu einer Vorzeichenumkehr der Phasenwinkeldifferenz führen. Im Ausführungsbeispiel ergibt sich bei Nennbetrieb des Motors 3 eine Phasenwinkeldifferenz von ca. 40°.

Kondensatoren 15 dienen zur Spannungsglättung, da die Ausgangsspannung des Frequenzumrichters 6 durch Pulsbreitenmodulation erzeugt und damit stark oberwellenhaltig ist.

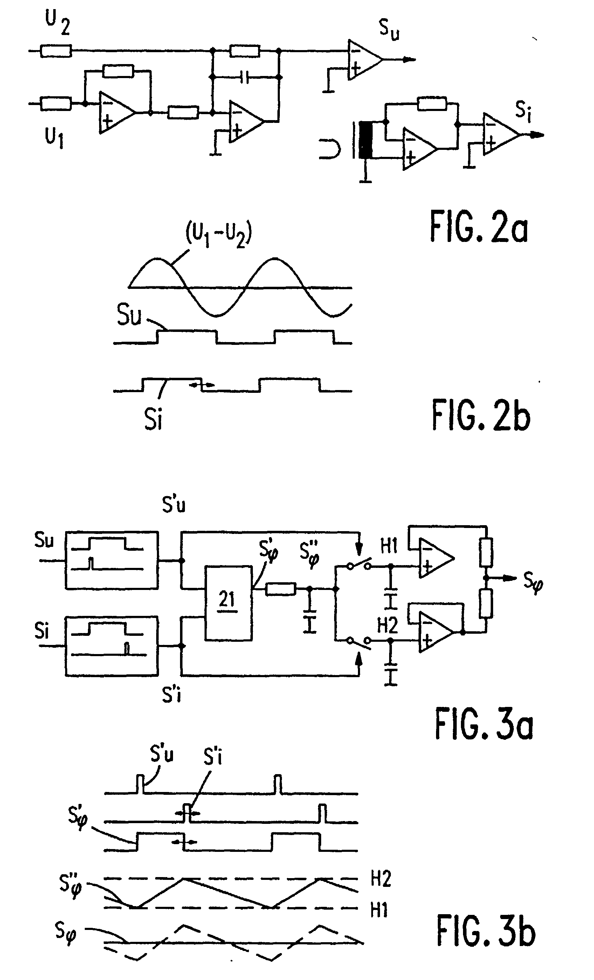

Die Spannungen Ui und Uu werden durch je einen Null-Komparator 17 bzw. 18 digitalisiert und zu gegeneinander entsprechend der Phasenwinkeldifferenz zwischen Ui und Uu phasenverschobenen Rechtecksignalen Si und Su umgeformt, deren Verlauf in Fig. 2b angedeutet ist.

Besonders einfache Schaltungen zur Bildung von Si und Su sind in den Figuren 2a und 2c dargestellt. Durch den direkten Masse-Bezug sind diese Schaltungen leicht zu schützen. Sie lassen sich gut so dimensionieren, daß Winkelfehler bei niedrigen Frequenzen und Offset-Fehler bei hohen Frequenzen genügend klein bleiben. Nicht dargestellt sind vorteilhafte antiparallele Dioden an den OP-Eingängen.

In der Vergleichsschaltung 19 nach Fig. 1 wird zunächst ein Winkelsignal S'ϕ als Rechtecksignal mit einer der Phasenwinkeldifferenz proportionalen Impulsbreite gebildet, dessen Mittelwert Sϕ am Kondensator 20 anliegt und mittels der nachgeschalteten Elemente als Kriterium dafür ausgewertet wird, ob sich der Motor 3 mit Betriebsdrehzahl dreht.

Eine vorteilhafte Schaltung zur Bildung von Sϕ aus den Signalen Su und Si ist in Fig. 3 dargestellt. Sie ermöglicht einen Phasenwinkel-Meßbereich von 360°, anstelle von nur 180° beim direkten Vergleich von Su und Si. Dies ist erforderlich für Unterbrechungen hinter dem Δ → Y-Trafo mit resultierender ± 60°- Winkelverschiebung zusätzlich zum normalen Betriebsbereich (25° bis 80°) und der Reaktion auf die Frequenzabsenkung. Aus den Flanken von Su und Si werden zunächst Tastimpulse S'u bzw. S'i (Fig. 3b) abgeleitet, welche abwechselnd das Flip-Flop 21 steuern, dessen Ausgangssignal S'ϕ über eine R-C-Kombination ein Signal S''ϕ (Fig. 3b) bildet. Die R-C-Kombination kann keine ausreichende Glättung bewirken, weil sie auf Phasenwinkeländerungen schnell reagieren muß. Im allgemeinen ist die Welligkeit bei niedrigen Frequenzen des Frequenzumrichters 6 sogar größer als das Nutzsignal. Deshalb steuern die Tastimpulse S'u und S'i zwei "Sample and Hold"-Schaltungen, durch welche Hüllkurven H₁ und H₂ gebildet werden. Nachgeschaltete Impedanzwandler mit in Reihe geschalteten Ausgangswiderständen formen das geglättete Winkelsignal Sϕ.

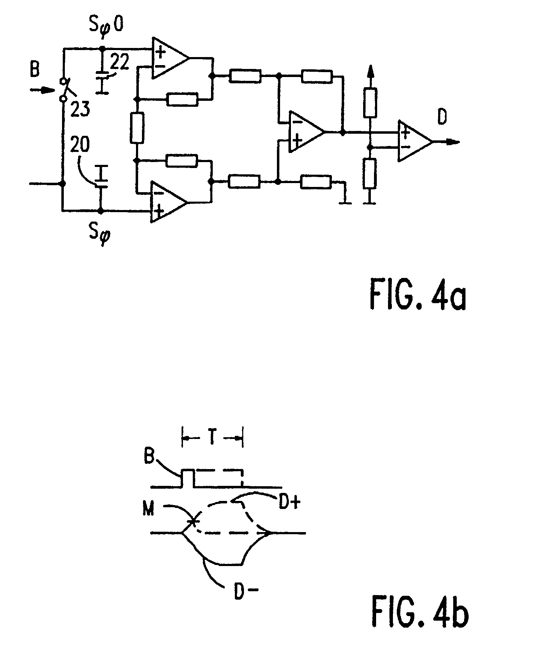

Die gemäß Fig. 1 am Kondensator 20 anliegende Signalspannung Sϕ liegt bei geschlossenem Schalter 23 auch am Kondensator 22 an. Der Schalter 23 wird beim Tastvorgang zur Prüfung der Rotation des Motors 3 während einer kurzen Tastzeit T (vgl. Fig.4b) geöffnet. Gleichzeitig wird die Steuereinrichtung 7 des Frequenzumrichters 6 mittels des Befehlssignals B veranlaßt, die Frequenz auf vorzugsweise 50% der Betriebsfrequenz zu erniedrigen. Dadurch verändert sich die Winkelsignalspannung Sϕ am Kondensator 20, während die Spannung Sϕ0 am Kondensator 22 unverändert bleibt.

Die Schaltung 24 liefert nur dann ein Ausgangssignal, wenn die Differenz Sϕ-Sϕ0 einen Mindestwert M überschreitet. Wenn auch der vom Stromwandler 11 ermittelte Strom einen Mindestwert überschreitet (nur dann ist eine Phasenwinkelmessung sinnvoll), wird über die Und-Schaltung 25 ein Signal an das Rotations-Flip-Flop 26 weitergeleitet, welches dadurch derart gesetzt wird, daß ein Freigabesignal über die Ausgangsleitung 27 zur Inbetriebsetzung der Röntgenröhre 2 abgegeben wird.

Zur Prüfung der Rotation liefert ein Digital-Zähler 27 das Tastzeitsignal 28 für die Frequenzabsenkung und wird über die Startschaltung 29 durch ein Startsignal A in Gang gesetzt. Dieses Startsignal A setzt auch über die Oderschaltung 30 das Rotations-Flip-Flop 26 zurück, so daß auf die Leitung 27 bei Beginn eines Tastvorganges zunächst kein Freigabesignal gegeben wird.

Bei kontinuierlich in regelmäßigen Zeitabständen aufeinanderfolgenden Tastvorgängen wird die Zurücksetzung des Rotations-Flip-Flop 26 durch den Zeitblock 31 veranlaßt. Damit dabei die Freigabe für den Betrieb der Röntgenröhre für die kurzen Tastzeiten nicht unterbrochen wird, ist eine Rotations-Memory-Schaltung 32 vorgesehen, welche zumindest für die Dauer der Tastzeit das Freigabesignal speichert.

Eine vorteilhafte Gestaltung der Schaltung 24 nach Fig. 1 zeigt Fig. 4. Beim Öffnen des Schalters 23 und damit bei Einstellen der Tastfrequenz erhöht sich die Spannung Sϕ gegenüber Sϕ0 bei Rotation des Motors. Der nachgeschaltete "Instrumenten-Verstärker" erzeugt ein massebezogenes, der Differenz Sϕ-Sϕ0 proportionales Signal genügend großer Amplitude. Danach folgt ein Komparator mit Referenzspannung, welcher entscheidet, ob das positive Differenzsignal D+ größer als das Referenzsignal M ist und somit der Freigabebefehl für die Röntgenröhre gegeben werden kann. Sobald der Wert M überschritten wird, kann der Tastvorgang abgebrochen und damit die Tastzeit T verkürzt werden (über die Leitung 33 in Fig. 1).

Bei Nichtanlauf des Motors würde ein negatives Differenzsignal D- (Fig. 4b) gemessen, welches das Rotations-Flip-Flop nicht auf Freigabe setzen kann.

## Patentansprüche

1. Röntgengerät mit einer Drehanodenröntgenröhre (2), mit einer Einrichtung zur Überwachung der Drehzahl eines Drehanodenantriebsmotors der Röntgenröhre (2), mit einer Sensorschaltung zur Ermittlung eines vom Phasenwinkel zwischen einer Bezugsspannung (Uu) und einem dem Motor zugeordneten Strom (I) abhängigen Winkelsignals (Sϕ), mit einer Vergleichsschaltung zum Detektieren der Änderung des Winkelsignals (Sϕ), welches als Kriterium für die Motordrehzahl dient, sowie mit einem Frequenzumrichter (6),
**dadurch gekennzeichnet, daß** eine Einrichtung zur Bildung eines kurzzeitigen Tastsignals für die Veranlassung einer Erniedrigung der Frequenz des Drehanodenantriebsmotors vorgesehen ist.

2. Anordnung nach Anspruch 1,
**dadurch gekennzeichnet, daß** Mittel zum Speichern (22) des vor Beginn des Tastsignals bei Betriebsfrequenz ermittelten Winkelsignals (Sϕ0) sowie Mittel zum Vergleichen (24) dieses Winkelsignals mit einem während der Tastzeit bei Tastfrequenz ermittelten Winkelsignal (Sϕ) vorgesehen sind.

3. Anordnung nach Anspruch 1 oder 2,
**dadurch gekennzeichnet, daß** die Tastfrequenz zwischen 25% und 75%, vorzugsweise zwischen 40% und 60% der Betriebsfrequenz beträgt.

4. Anordnung nach einem der Ansprüche 1 bis 3,
**dadurch gekennzeichnet, daß** die Phasenlage der Bezugsspannung derart gewählt ist, daß das bei Betriebsfrequenz und Betriebsdrehzahl meßbare Winkelsignal einem Winkel von 25° bis 80°, insbesondere 40° bis 60° entspricht.

5. Anordnung nach einem der Ansprüche 1 bis 4, **dadurch gekennzeichnet, daß** Mittel zur Durchführung von Meßvorgängen in regelmäßigen Zeitabständen vorgesehen sind.

6. Anordnung nach einem der Ansprüche 1 bis 5, **dadurch gekennzeichnet, daß** Mittel zum Sperren der Einschaltung der Röntgenröhre bei Detektion einer zu niedrigen Motordrehzahl vorgesehen sind.

7. Anordnung nach Anspruch 1 oder 2,
**dadurch gekennzeichnet, daß** sie Schaltungen zur Bildung von Rechtecksignalen (Si,Su) aufweist, wobei die Phasenlage eines Rechtecksignals (Su) von der Bezugsspannung und die des anderen (Si) von einem dem Motor zugeordneten Strom abhängt, daß sie ferner Schaltungen zur Bildung von Tastimpulsen (S'u,S'i) einerseits aus der ansteigenden Flanke des spannungsabhängigen Signals (Su) und andererseits aus der abfallenden Flanke des stromabhängigen Signals (Si) aufweist, und daß eine Schaltung zur Bildung eines dem Zeitabstand der Tastimpulse proportionalen Signals vorgesehen ist.

8. Röntgengenerator mit einer Einrichtung zur Überwachung der Drehzahl eines Drehanodenantriebsmotors, mit einer Sensorschaltung zur Ermittlung eines vom Phasenwinkel zwischen einer Bezugsspannung (Uu) und einem dem Motor zugeordneten Strom (I) abhängigen Winkelsignals (Sϕ), mit einer Vergleichsschaltung zum Detektieren der Änderung des Winkelsignals (Sϕ), welches als Kriterium für die Motordrehzahl dient, sowie mit einem Frequenzumrichter (6),
**dadurch gekennzeichnet, daß** eine Einrichtung zur Bildung eines kurzzeitigen Tastsignals für die Veranlassung einer Erniedrigung der Frequenz des Drehanodenantriebsmotors vorgesehen ist.

## Revendications

1. Appareil radiographique avec un tube à rayons X à anode tournante (2), avec un dispositif de surveillance de la vitesse de rotation d'un moteur d'entraînement d'une anode tournante du tube à rayons X (2), avec un circuit de capteur pour la détermination d'un signal angulaire (Sϕ) dépendant de l'angle de phase entre une tension de référence (Uu) et un courant (I) affecté au moteur, avec un circuit de comparaison pour la détection de la variation du signal angulaire (Sϕ) qui sert de critère pour la vitesse de rotation du moteur ainsi qu'avec un transformateur de fréquence (6),
**caractérisé en ce qu'**un dispositif de formation d'un signal de modulation de courte durée est prévu pour provoquer une réduction de la fréquence du moteur d'entraînement de l'anode tournante.

2. Dispositif selon la revendication 1,
**caractérisé en ce que** des moyens d'enregistrement (22) du signal angulaire (Sϕ0) déterminé avant le début du signal de modulation à la fréquence de service ainsi que des moyens de comparaison (24) de ce signal angulaire sont prévus avec le signal angulaire (Sϕ) déterminé pendant le temps de modulation à la fréquence de modulation.

3. Dispositif selon l'une des revendications 1 ou 2,
**caractérisé en ce que** la fréquence de modulation se situe entre 25% et 75%, de préférence entre 40% et 60% de la fréquence de service.

4. Dispositif selon l'une des revendications 1 à 3,
**caractérisé en ce que** la position de phase de la tension de référence est choisie de telle sorte que le signal angulaire mesurable en cas de fréquence de service et de vitesse de rotation de service correspond à un angle de 25° à 80°, en particulier de 40 à 60°.

5. Dispositif selon l'une des revendications 1 à 4,
**caractérisé en ce que** des moyens sont prévus pour la mise en oeuvre des processus de mesure à intervalles temporels réguliers.

6. Dispositif selon l'une des revendications 1 à 5,
**caractérisé en ce que** des moyens de blocage de l'activation du tube à rayons X sont prévus en cas de détection d'une vitesse de rotation insuffisante du moteur.

7. Dispositif selon l'une des revendications 1 ou 2,
**caractérisé en ce qu'**il comprend des circuits de formation de signaux rectangulaires (Si, Su), la position de phase d'un signal rectangulaire (Su) dépendant de la tension de référence et celle de l'autre (Si) d'un courant affecté au moteur, qu'il présente par ailleurs des circuits de formation d'impulsions de modulation (S'u, S'i), d'une part, à partir du flanc ascendant du signal (Su) dépendant de la tension et, d'autre part, à partir du flanc descendant du signal (Si) dépendant du courant, et qu'un circuit est prévu pour la formation d'un signal proportionnel à l'intervalle temporel des impulsions de modulation.

8. Générateur de rayons X avec un dispositif de surveillance de la vitesse de rotation d'un moteur d'entraînement de l'anode tournante, avec un circuit de capteur pour la détermination d'un signal angulaire (Sϕ) dépendant de l'angle de phase entre une tension de référence (Uu) et un courant (I) affecté au moteur, avec un circuit de comparaison pour la détection de la variation du signal angulaire (Sϕ) qui sert de critère à la vitesse de rotation du moteur ainsi qu'avec un transformateur de fréquence (6),
**caractérisé en ce qu'**il est prévu un dispositif de formation d'un signal de modulation de courte durée pour provoquer une réduction de la fréquence du moteur d'entraînement de l'anode tournante.

## Claims

1. An X-ray apparatus, comprising a rotary-anode X-ray tube (2), a device for monitoring the rotational speed of a rotary-anode drive motor of the X-ray tube (2), a sensor circuit for determining an angle signal (Sϕ) which is dependent on the phase angle between a reference voltage (Uu) and a current (I) associated with the motor, a comparator circuit for detecting the angle signal (Sϕ) variation which serves as a criterion for the rotational speed of the motor, and also comprising a frequency changer (6), **characterized in that** there is provided a device for forming a brief keying signal for triggering a reduction of the frequency of the rotary-anode drive motor.

2. An arrangement as claimed in Claim 1, **characterized in that** there are provided means (22) for storing the angle signal (Sϕ0) determined at the operating frequency prior to the beginning of the keying signal, as well as means (24) for comparing said angle signal with an angle signal (Sϕ) determined at the keying frequency during the keying period.

3. An arrangement as claimed in Claim 1 or 2, **characterized in that** the keying frequency amounts from 25% to 75%, and preferably from 40% to 60%, of the operating frequency.

4. An arrangement as claimed in one of the Claims 1 to 3, **characterized in that** the phase position of the reference voltage is chosen to be such that the angle signal which can be measured at the operating frequency and at the operating rotational speed corresponds to an angle of from 25° to 80°, notably from 40° to 60°.

5. An arrangement as claimed in one of the Claims 1 to 4, **characterized in that** there are provided means for carrying out measuring operations at regular intervals.

6. An arrangement as claimed in one of the Claims 1 to 5, **characterized in that** there are provided means for inhibiting the activation of the X-ray tube when the detected rotational speed of the motor is too low.

7. An arrangement as claimed in Claim 1 or 2, **characterized in that** it comprises circuits for forming square-wave signals (Si, Su), the phase position of one square-wave signal (Su) being dependent on the reference voltage whereas that of the other square-wave signal (Si) is dependent on a current associated with the motor, that there are also provided circuits for forming keying pulses (S'u, S'i) on the one hand from the positive-going edge of the voltage-dependent signal (Su) and on the other hand from the negative-going edge of the current-dependent signal (Si), and that there is provided a circuit for forming a signal which is proportional to the time interval of the keying pulses.

8. An X-ray generator, comprising a device for monitoring the rotational speed of a rotary-anode drive motor, a sensor circuit for determining an angle signal (Sp) which is dependent on the phase angle between a reference voltage (Uu) and a current (I) associated with the motor, a comparator circuit for detecting the angle signal (Sϕ) variation which serves as a criterion for the rotational speed of the motor, and also comprising a frequency changer (6), **characterized in that** there is provided a device for forming a brief keying signal for triggering a reduction of the frequency of the rotary-anode drive motor.
